# EUROPEAN PATENT SPECIFICATION

(11) **EP 0 425 423 B1**
(45) Date of publication and mention of the grant of the patent: **05.04.1995**
(21) Application number: 90610067.2
(22) Date of filing: 23.10.1990
(51) Int. Cl.: A23L 1/305, A23L 1/30, A23L 1/308, A23L 1/09

(54) **A process for the preparation of a low-calorie nutritional preparation**
Verfahren zur kalorienarmen Nahrungszubereitung
Procédé de préparation d'une préparation nutritive pauvre en calories

(30) Priority: 24.10.1989 DK 5281/89
(43) Date of publication of application: 02.05.1991
(73) Proprietor: Hoeie, Lars Henrik, London NW8 0LU (GB)
(72) Inventor: Hagelid, Per, N-1166 Oslo 11 (NO)
(74) Representative: Bagger-Soerensen, Birgitte

(56) References cited:
- EP-A- 0 147 699
- EP-A- 0 336 662
- WO-A-80/02226
- WO-A-86/03380
- FR-A- 2 375 834
- US-A- 3 976 800

## Description

The present invention relates to a process for the preparation of a low-calorie nutritional preparation, especially for use as the main or sole nutrition in the treatment of adipositas.

Adipositas is a widespread problem in large parts of the world. At the same time, the increased health consciousness has stimulated the interest in "keeping the slim line". A large number of different diets have therefore been put on the market aiming at a rapid weight reduction.

Some of these diets must be considered unwarrantable seen from a nutritional point of view as they are based on a very unbalanced intake of nutrients which very quickly will result in deficiency of essential nutrients.

Other diets are based on nutritional preparations being composed in such a way that at a low calorie content they supply the necessary proteins, vitamins and minerals. Some of these preparations are in the form of powders containing sources of protein, carbohydrate and fat, and optionally flavouring agents, preservatives, vitamins, minerals and other conventional additives. Before intake, the powders are stirred up in water and then taken as a drink or a gruel . However, the known preparations suffer from a number of deficiencies. The known powders can only with difficulty be stirred up in water so that the stirred up preparations will have a lumpy and gritty consistency which makes them very unpleasant to take. At the same time, sedimentation occurs very quickly, involving the risk that essential components such as sparingly soluble minerals are not taken in, but remain as a sediment at the bottom of the glass. Finally, the preparations have an unpleasant tang which persists as an after-taste a long time after the preparation has been taken. These disadvantages have the effect that many persons break off the diet too soon.

A very comprehensive work has therefore been carried out to provide a nutritional powder of the above-mentioned nature which has improved consistency, solubility/dispersibility and taste with a view to making the product more acceptable to the consumer. As a result hereof, it has been discovered that a nutritional preparation having a strongly improved consistency and solubility/dispersibility can be achieved by a process for the preparation of a powdery low-calorie nutritional preparation, especially to be used as the essential or sole nutrition in the treatment of adipositas, in which sources of protein, carbohydrate and fat, and optionally flavouring agents, preservatives, vitamins, minerals and other conventional additives such as emulsifiers and antioxidants, are combined, when soya protein concentrate, agglomerated skimmed milk powder and soya phospholipid are used as sources of protein, carbohydrate and fat.

Other low-calorie nutritional preparations are known from US-A-3 976 800 and FR-A-2 375 834.

US-A-3 976 800 relates to a process for the preparation of biscuits and the problems associated therewith, among others with regard to chewing characteristics. The reference fails to disclose the specific combination of ingredients used in the present invention and the advantages achieved thereby with regard to solubility and dispersability.

FR-A-2 375 834 relates to a protein-rich nutrition preparation. The preparation according to the reference differs from the preparation according to the present application in several respects. Thus, the composition according to the reference does not include soya phospholipid and the milk ingredient is not agglomerated skimmed milk powder and is presumably less soluble than agglomerated skimmed milk powder. Furthermore, the known composition includes dextrose and sugar. Sugar is undesirable from a nutritional point of view and is partly added in order to increase the solubility of the product. Furthermore, the product is not composed in such a manner that it covers the daily need of protein, carbohydrate and fat as well as vitamins and/or minerals.

In the preparation prepared by the process according to the invention it is preferable to use a soya protein concentrate prepared on the basis of shelled soya beans, and equally it is preferred to use a soya protein concentrate substantially freed from water-soluble carbohydrates and flavouring agents. Such products have been found to have a high degree of solubility, a high water binding capacity and excellent fat emulsification properties. Besides, they are of neutral taste.

An additional improvement of the taste and consistency of the preparation is achieved by adding lecithinated cocoa.

The employed lecithinated cocoa will typically contain 2-8 weight% of lecithin, preferably 3-7 weight% of lecithin, and most preferably 4-6 weight% of lecithin. The lecithinated cocoa is preferably included in an amount corresponding to 35-65 weight% of the skimmed milk powder.

The weight ratio between protein, carbohydrate and fat of the prepared product will typically be 40-60 parts of protein to 15-35 parts of carbohydrate to 2.0-6.0 parts of fat, and preferably 45-55 parts of protein to 20-30 parts of carbohydrate to 3.0-6.0 parts of fat. However, also other amounts can be used, if appropriate for a desired end use.

It is furthermore preferable that the employed components contain a certain amount of fibres, such as 3-8 parts by weight of fibres. These fibres may wholly or partly be derived from the soya protein concentrate and the cocoa.

It has furthermore been found that a further improvement of the taste of the product can be achieved if vitamins and minerals are not included in the powder but administered in tablet form, which in addition gives a safer dosage of these essential components. Therefore, according to a preferred embodiment of the process of the invention vitamins and minerals are not added in addition to those naturally forming part of the employed components.

For the purpose of a simple and safe dosage, the low-calorie nutritional preparation is preferably packed in a package intended for being able to cover the total nutrition requirement for a defined period of time, for example a week, whereby the preparation is divided up into suitable sub-units of a daily dose, preferably five sub-units per daily dose, which are packed separately before packing into the package, or the package is provided with means for apportioning of such sub-unit, and furthermore a number of daily doses of vitamins and minerals in tablet form corresponding to the chosen time period are enclosed in the package.

Adipositas is often accompanied by an increased fatty content in the blood. It is therefore desirable to alter the lipid profile. Fish oils containing polyunsaturated fatty acids (ω-3 fatty acids) have been found to have a favourable influence on the lipid profile, as they lower the total serum cholesterol content while at the same time increasing the HDL/LDL ratio. This activity is desirable also from a general health view. In the package mentioned above, there is, therefore, also preferably included a number of daily doses of fish oil containing polyunsaturated fatty acids in capsule form, corresponding to the chosen time period.

The fish oil may also be added in microencapsulated form and as such be admixed to the powder.

The chemical composition of the employed agglomerated skimmed milk powder corresponds to a non-agglomerated skimmed milk powder, but the altered physical form makes the product very readily soluble in water.

The soya phospholipid serves as a source for unsaturated fatty acids, especially linolic and linolenic acid, and it is furthermore assumed that it acts as emulsifier and stabilizing agent when the nutritional powder is stirred up in water.

The amount of energy in a daily dose will normally be from 300-600 Kcals (1260-2520 kilojoule), preferably from 350-500 Kcals (1470-2100 kilojoule) and most preferably 400-450 Kcals (1680-1890 kilojoule).

As mentioned above, the preparation is in particular intended for use as the main or sole nutrition in the treatment of adipositas, but the preparation may, of course, also be used as a nutritional supplement, f. ex. in the treatment of anorexia, where it is difficult to secure the requisite supply of essential nutritional components through food intake.

In a presently preferred composition the powder consists of 60 parts by weight of soya protein concentrate, 25 parts by weight of agglomerated skimmed milk powder, 2.0 parts by weight of soya phospholipid, 12.5 parts by weight of lecithinated cocoa having a lecithin content of 5% and 0.2 parts by weight of vanillin to which may be added 0.2 parts by weight of aspartame as sweetening agent, preferably 0.16 parts by weight of aspartame. In addition, 1.6 parts by weight of NaCl is added for optimalization of the electrolyte content.

122 g of this powder corresponds to a daily dose. Such dosis supplies to the body 61.3 g protein containing the essential aminoacids, 30.5 g carbohydrate, 6.0 g fat and 5.4 g fibres. The daily dose is divided into five portions which are stirred up in water and administered at intervals of 3-4 hours, so that the intake is spread as evenly as possible over 24 hours. It is important that the preparation be taken at such regular intervals as possible, as it has been proved that the metabolism is increased during each meal.

Vitamins and minerals are dosed within the limits laid down by the health authorities and are administered 1 time daily in tablet form. On basis of these norms each tablet contains, in the presently preferred embodiment, vitamins and minerals as follows, in supplement of the vitamins and minerals contained in the nutritional powder:
Vitamins: Vit. A 3000 IU, vit. D₃ 200 IU, vit. E 10 mg, vit. B₁ 1,5 mg, vit. B₂ 1,5 mg, niacinamide 15 mg, vit. B₆ 2.0 mg, folic acid 100 »g, vit. B₁₂ 4 »g, pantothenic acid 4 mg and vit. C 60 mg.

Minerals: Iron 10 mg, zinc 10 mg, iodine 75 »g, copper 1.5 mg, manganese 1 mg, chromium 75 »g and selenium 75 »g.

Each fish oil capsule contains one gram of fish oil concentrate which contains 180 mg EPA (eicosapentaenoic acid) and 120 mg DHA (decosahexaenoic acid) corresponding to more than 30% omega-3 fatty acids.

A daily dose of the nutritional powder contains a total of abt. 430 Kcals. (1806 kilojoule).

Of 80 patients, approximately evenly distributed on men and women, who went through with an 8 weeks diet of a preferred composition as stated above, the men achieved an average weight reduction of 19.4 kg with weight losses varying from 10.5 - 30.6 kg, while the women achieved an average weight loss of 12.7 kg, with weight losses varying from 7.8 - 19.5 kg. None of them gave up the diet, but two had meals beside the diet (the man and the woman with the lowest weight loss, respectively), and about half of them occasionally supplemented with vegetables. All the patients went through very comprehensive laboratory tests before and after the diet, and no essential side-effects were found. In abt. 5% of the patients there was a slight rise of the uric acid content which was quickly normalized after the diet. The treatment regimen had a favourable effect on the cholesterol and glucose level.

The invention is further illustrated by the following examples.

### Example 1

The following components were mixed per 1000 g of powder.
590 g "Danpro S" ¹⁾
247 g agglomerated skimmed milk powder ²⁾
123 g lecithinated cocoa 10/12 DP from Bensdorp ³⁾
20.5 g "Epikuron 100 SPI" ⁴⁾
1.9 g vanillin
1.6 g aspartame
16 g NaCl
¹⁾ A soya protein concentrate prepared from shelled soya beans and freed from undesired components such as water-soluble carbohydrates, flavouring agents and growth inhibiting agents. The concentrate typically contains 66.0% protein, 17.0% carbohydrate, 6.0% water, 5.6% ashes, 4.0% wood substance and 1.4% fat.
²⁾ Typically contains 34.8 g protein, 1.4 g fat, 52.7 g carbohydrate, 7.8 g ashes, and max. 4.0 g water per 100 g of product.
³⁾ The product contains 5% lecithin, and the cocoa part typically contains 23% protein, 35% carbohydrate, 18% cellulose, 2.5% theobromine and max. 5% water.
⁴⁾ A total complex of isolated soya phospholipids containing 57-61% fatty acids, of which 62-68% are polyunsaturated distributed on 56-60% linolic acid and 6-8% linolenic acid.

The powder was packed in envelopes of 24 g each.

The invention has in the foregoing been described by means of specific embodiments, but it will be understood that various changes and modifications may be performed without deviating from the scope and spirit of the invention.

## Claims

1. A process for the preparation of a powdery low-calorie nutritional preparation, especially for use as the main or sole nutrition in the treatment of adipositas, in which sources of protein, carbohydrate and fat and optionally flavouring agents, preservatives, vitamins, minerals and other conventional additives are combined, CHARACTERIZED in that soya protein concentrate, agglomerated skimmed milk powder and soya phospholipid are used as sources of protein, carbohydrate and fat.

2. A process according to Claim 1, CHARACTERIZED in that the employed soya protein concentrate is prepared from shelled soya beans.

3. A process according to Claim 1 or 2, CHARACTERIZED in that the employed soya protein concentrate substantially is freed from water-soluble carbohydrates and flavouring agents.

4. A process according to one or more of the Claims 1-3, CHARACTERIZED by additionally including lecithinated cocoa, said lecithinated cocoa preferably containing 2-8 weight% of lecithin, and most preferably 4-6 weight% of lecithin, and preferably including said lecithinated cocoa in an amount corresponding to 35-65 weight% of the skimmed milk powder.

5. A process according to one or more of the preceding claims, CHARACTERIZED in that the weight ratio between protein, carbohydrate and fat in the prepared preparation is 40-60 parts of protein to 15-35 parts of carbohydrate to 2.0-6.0 parts of fat, preferably 45-55 parts of protein to 20-30 parts of carbohydrate to 3.0-6.0 parts of fat.

6. A process according to one or more of the preceding claims, CHARACTERIZED in that vitamins and minerals are not added in addition to those naturally occurring in the employed components.

7. A process according to one or more of the preceding claims, CHARACTERIZED in that the employed components contain a total of 3-8 parts by weight of fibres.

8. A process according to one or more of the preceding claims, CHARACTERIZED by additionally including fish oil containing polyunsaturated fatty acids in capsule form.

9. A process according to Claim 8, CHARACTERIZED in that the fish oil is included in microencapsulated form.

10. A process according to one or more of the preceding claims, CHARACTERIZED in that the low-calorie nutritional preparation is packed in a package intended for being able to cover the total nourishment requirement for a defined period of time, for example a week, the preparation being divided into suitable sub-units of a daily dose, preferably 5 sub-units per daily dose, which are packed separately prior to packing in the package, or the package is provided with means for apportioning of such sub-unit, and in that a number of daily doses of vitamins and minerals in tablet form corresponding to the chosen time period are packed in the package, and optionally a number of daily doses of fish oil containing polyunsaturated fatty acids in capsule form corresponding to said time period.

## Patentansprüche

1. Verfahren zur Herstellung eines pulverförmigen kalorienarmen Nährstoffpräparats (Lebensmittelpräparats), insbesondere für die Verwendung als Haupt- oder einziges Nährmittel (Lebensmittel) bei der Behandlung von Adipositas, in dem Quellen für Protein, Kohlenhydrat und Fett sowie gegebenenfalls Aromastoffe, Konservierungsmittel, Vitamine, Mineralien und andere konventionelle Additive (Zusätze) miteinander kombiniert sind, dadurch gekennzeichnet, daß Sojaprotein-Konzentrat, agglomeriertes Magermilch-Pulver und Sojaphospholipid als Quellen für Protein, Kohlenhydrat und Fett verwendet werden.

2. Verfahren nach Anspruch 1, dadurch gekennzeichnet, daß das verwendete Sojaprotein-Konzentrat aus geschälten Sojabohnen hergestellt wird.

3. Verfahren nach Anspruch 1 oder 2, dadurch gekennzeichnet, daß das verwendete Sojaprotein-Konzentrat im wesentlichen frei von wasserlöslichen Kohlenhydraten und Aromastoffen ist.

4. Verfahren nach einem oder mehreren der Ansprüche 1 bis 3, dadurch gekennzeichnet, daß es zusätzlich lecithiniertes Kakaopulver enthält, das vorzugsweise 2 bis 8 Gew.-% Lecithin und am meisten bevorzugt 4 bis 6 Gew.-% Lecithin enthält, und daß es das lecithinierte Kakaopulver in einer Menge entsprechend 35 bis 65 Gew.-% des Magermilchpulvers enthält.

5. Verfahren nach einem oder mehreren der vorhergehenden Ansprüche, dadurch gekennzeichnet, daß das Gewichtsverhältnis zwischen Protein, Kohlenhydrat und Fett in dem hergestellten Präparat 40 bis 60 Teile Protein auf 15 bis 35 Teile Kohlenhydrat auf 2,0 bis 6,0 Teile Fett, vorzugsweise 45 bis 55 Teile Protein auf 20 bis 30 Teile Kohlenhydrat auf 3,0 bis 6,0 Teile Fett beträgt.

6. Verfahren nach einem oder mehreren der vorhergehenden Ansprüche, dadurch gekennzeichnet, daß Vitamine und Mineralien nicht zusätzlich zu denjenigen, wie sie in den verwendeten Komponenten natürlicherweise vorkommen, zugesetzt werden.

7. Verfahren nach einem oder mehreren der vorhergehenden Ansprüche, dadurch gekennzeichnet, daß die verwendeten Komponenten eine Gesamtmenge von 3 bis 8 Gew.-Teilen Fasern enthalten.

8. Verfahren nach einem oder mehreren der vorhergehenden Ansprüche, dadurch gekennzeichnet, daß das Präparat zusätzlich Fischöl enthält, das mehrfach ungesättigte Fettsäuren in Form einer Kapsel enthält.

9. Verfahren nach Anspruch 8, dadurch gekennzeichnet, daß das Fischöl in mikroeingekapselter Form darin enthalten ist.

10. Verfahren nach einem oder mehreren der vorhergehenden Ansprüche, dadurch gekennzeichnet, daß das kalorienarme Nährstoffpräparat (Lebensmittelpräparat) in einer Packung abgepackt ist, die den gesamten Nährstoffbedarf für eine vorgegebene Zeitspanne, beispielsweise eine Woche, enthält, wobei das Präparat in geeignete Untereinheiten einer täglichen Dosis, vorzugsweise 5 Untereinheiten pro täglicher Dosis, unterteilt ist, die getrennt abgepackt sind, bevor sie zu der Packung verpackt werden, oder die Packung mit Einrichtungen zur Portionierung dieser Subuntereinheit ausgestattet ist und daß die Anzahl der täglichen Dosen an Vitaminen und Mineralien in Tablettenform, die dem gewählten Zeitraum entspricht, in der Packung verpackt sind und daß gegebenenfalls eine Anzahl von täglichen Dosen von Fischöl darin abgepackt sind, das mehrfach ungesättigte Fettsäuren in Kapselform enthält, die dem genannten Zeitraum entsprechen.

## Revendications

1. Procédé pour la préparation d'une préparation nutritive en poudre pauvre en calories, utilisable en particulier comme aliment principal ou unique dans le traitement de l'adipose, dans lequel des sources de protéine, d'hydrate de carbone et de graisse et éventuellement des arômes, des conservateurs, des vitamines, des sels minéraux et d'autres additifs classiques sont combinés, caractérisé en ce qu'un concentré de protéine de soja, une poudre de lait écrémé agglomérée et un phospholipide de soja sont utilisés comme sources de protéine, d'hydrate de carbone et de graisse.

2. Procédé suivant la revendication 1, caractérisé en ce que le concentré de protéine de soja employé est préparé à partir de soja égréné.

3. Procédé suivant les revendications 1 ou 2, caractérisé en ce que le concentré de protéine de soja employé est pratiquement débarrassé d'hydrates de carbone et d'arômes solubles dans l'eau.

4. Procédé suivant l'une ou plusieurs des revendications 1 à 3, caractérisé par l'incorporation supplémentaire de cacao lécithiné, ce cacao lécithiné contenant de préférence 2 à 8% en poids de lécithine, et plus avantageusement 4 à 6% en poids de lécithine, et comprenant de préférence ce cacao lécithiné en une quantité correspondant à 35 à 65% en poids du lait écrémé en poudre.

5. Procédé suivant l'une ou plusieurs des revendications précédentes, caractérisé en ce que le rapport en poids entre la protéine, l'hydrate de carbone et la graisse dans la préparation obtenue est de 40 à 60 parties de protéine à 15 à 35 parties d'hydrate de carbone à 2,0 à 6,0 parties de graisse, de préférence de 45 à 55 parties de protéine à 20 à 30 parties d'hydrate de carbone à 3,0 à 6,0 parties de graisse.

6. Procédé suivant l'une ou plusieurs des revendications précédentes, caractérisé en ce que des vitamines et des sels minéraux ne sont pas ajoutés en plus de ceux qui se trouvent naturellement dans les composants mis en oeuvre.

7. Procédé suivant l'une ou plusieurs des revendications précédentes, caractérisé en ce que les composants employés contiennent un total de 3 à 8 parties en poids de fibres.

8. Procédé suivant l'une ou plusieurs des revendications précédentes, caractérisé par l'incorporation supplémentaire d'huile de poisson contenant des acides gras polyinsaturés sous forme de gélule.

9. Procédé suivant la revendication 8, caractérisé en ce que l'huile de poisson est incorporée sous une forme microencapsulée.

10. Procédé suivant l'une ou plusieurs des revendications précédentes, caractérisé en ce que la préparation nutritive pauvre en calories est conditionnée dans un conditionnement destiné à pouvoir couvrir les besoins alimentaires totaux pendant une période de temps définie, par exemple, une semaine, la préparation étant divisée en sous-unités convenables fournissant une dose quotidienne, de préférence 5 sous-unités par dose quotidienne, lesquelles sont conditionnées de façon séparée avant emballage dans le conditionnement, ou bien le conditionnement est pourvu de moyens pour distribuer une telle sous-unité, et en ce qu'un certain nombre de doses quotidiennes de vitamines et de sels minéraux sous forme de comprimé correspondant à la période de temps choisie est emballé dans le conditionnement, et éventuellement un certain nombre de doses quotidiennes d'huile de poisson contenant des acides gras polyinsaturés sous forme de gélule correspondant à cette période de temps.
